# EUROPÄISCHE PATENTSCHRIFT

(11) **EP 2 695 233 B1**
(45) Veröffentlichungstag und Bekanntmachung des Hinweises auf die Patenterteilung: **24.10.2018**
(21) Anmeldenummer: 12706820.3
(22) Anmeldetag: 27.02.2012
(51) Int. Cl.: H01Q 1/12, H01Q 1/52, H01R 12/50

(54) **FLACHLEITER-ANSCHLUSSELEMENT FÜR EINE ANTENNENSTRUKTUR**
FLAT-CONDUCTOR CONNECTION ELEMENT FOR AN ANTENNA STRUCTURE
ÉLÉMENT DE CONNEXION DE CONDUCTEUR PLAT POUR UNE STRUCTURE D'ANTENNE

(30) Priorität: 06.04.2011 EP 11161283
(43) Veröffentlichungstag der Anmeldung: 12.02.2014
(73) Patentinhaber: Saint-Gobain Glass France, 92400 Courbevoie (FR)
(72) Erfinder: REUL, Bernhard, 52134 Herzogenrath (DE); DROSTE, Stefan, 52134 Herzogenrath (DE); DEGEN, Christoph, 47918 Tönisvorst (DE)
(74) Vertreter: Gebauer, Dieter Edmund
(86) Internationale Anmeldenummer: PCT/EP2012/053245
(87) Internationale Veröffentlichungsnummer: WO 2012/136411

(56) Entgegenhaltungen:
- DE-U1-202004 001 446
- DE-U1-202004 019 286

## Beschreibung

Die Erfindung betrifft eine Scheibenanordnung mit einem Flachleiter-Anschlusselement für eine Antennenstruktur sowie ein Verfahren zu deren Herstellung.

Aktuelle Kraftfahrzeuge benötigen eine Vielzahl von technischen Einrichtungen zum Senden und Empfangen von Grunddiensten wie Rundfunkempfang, vorzugsweise in den Bändern AM, FM oder DAB, Mobiltelefonie in den Bändern GSM 900, GSM 1800 und UMTS sowie satellitengestützer Navigation (GPS).

Die in konventionellen Fahrzeugscheiben verbauten Antennen sind vom Typ Linienstrahler. Der Begriff Linienstrahler beschreibt hier eine linienförmige Antenne, die sowohl zum Empfangen als auch zum Senden elektromagnetischer Wellen geeignet ist. Linienstrahler haben eine geometrische Länge, die deren geometrische Breite um mehrere Größenordnungen übersteigt. Die geometrische Länge eines Linienstrahlers ist der Abstand zwischen Antennenfußpunkt und Antennenspitze, die geometrische Breite ist die hierzu senkrechte Abmessung. Für Linienstrahler gilt in der Regel der folgende Zusammenhang: Länge/Breite ≥ 100. Entsprechendes gilt bei Linienstrahlern für deren geometrische Höhe, worunter eine Abmessung zu verstehen ist, die sowohl senkrecht zur Länge als auch senkrecht zur Breite ist, wobei in der Regel der Zusammenhang Länge/Höhe ≥ 100 gilt.

Linienstrahler dürfen auch in Windschutzscheiben von Kraftfahrzeugen eingesetzt werden, vorausgesetzt, dass sie unter Beachtung gesetzlicher Vorschriften die Sicht des Fahrers nicht beeinträchtigen. Dies kann beispielsweise durch Feindrähte mit einem Durchmesser von typischerweise 10 bis 150 µm erreicht werden. Durch Linienstrahler kann im Bereich der terrestrischen Bänder II bis V ein zufrieden stellendes Antennensignal bereitgestellt werden. Gemäß einer Definition der Internationalen Fernmeldeunion (ITU = International Telecommunication Union) handelt es sich hierbei um den Frequenzbereich von 87,5 MHz bis 960 MHz (Band II: 87,5-100 MHz, Band III: 162-230 MHz, Band IV: 470-582 MHz, Band V: 582-960 MHz). Allerdings lässt sich durch Linienstrahler im vorgelagerten Frequenzbereich von Band I (41-68 MHz) keine zufrieden stellende Empfangsleistung mehr erzielen. Gleiches gilt auch für Frequenzen unterhalb von Band I.

Für den Empfang von Frequenzen im Bereich von Band I sind flächenförmige Antennen besser geeignet. Solche flächenförmigen Antennen oder Flächenantennen sind sowohl zum Empfangen als auch zum Senden von elektromagnetischen Wellen geeignet und werden im Folgenden auch als Flächenstrahler bezeichnet.

Flächenstrahler basieren auf einer flächenhaften, elektrisch leitfähigen, transparenten Beschichtung und sind beispielsweise aus den Druckschriften DE 101 06 125 A1, DE 103 19 606 A1, EP 0 720 249 A2, US 2003/0112190 A1 und DE 198 32 228 C2 bekannt. Die leitfähige Beschichtung wird mit einer Koppelelektrode galvanisch oder kapazitiv gekoppelt und das Antennensignal im Randbereich der Scheibe am sogenannten Antennenfußpunkt zur Verfügung gestellt.

Durch eine geeignete Kombination von Linienstrahler und Flächenstrahler können sehr breitbandige Hybridantennen zum Empfangen und Senden elektromagnetischer Wellen in einem Kraftfahrzeug bereitgestellt werden.

Die Antennensignale werden über einen Anschlussleiter einem Empfangsgerät zugeführt, typischer Weise unter Zwischenschaltung eines Antennenverstärkers. Als Anschlussleiter werden gewöhnlich ungeschirmte Litzendrähte oder Flachleiter eingesetzt. Diese verfügen über einen relativ niedrigen ohmschen Widerstand und verursachen nur geringe ohmsche Leistungsverluste. Solche ungeschirmten Litzendrähte oder Flachleiter lassen keine definierte Signalübertragung zu, da es durch unvermeidliche Lagetoleranzen zu undefinierten Verkopplungen mit der elektrisch leitfähigen Fahrzeugkarosserie oder benachbarten Leitern kommen kann, so dass die Schwankungsbreite wichtiger Antenneneigenschaften wie Bandbreite, Effizienz und Leitungsimpedanz relativ groß ist. Des Weiteren werden über solche ungeschirmten Anschlussleiter leicht elektromagnetische Störungen in das System eingekoppelt und in den Antennenverstärker weitergeleitet.

US 3 459 879 A offenbart einen flexiblen, mehradrigen Flachleiter. Die einzelnen Adern sind entweder paarweise mit einer Masseleitung angeordnet oder weisen eine gemeinsame einseitige, flächige Masseleitung auf.

DE 195 36 131 C1 offenbart ein Verfahren zur Herstellung einer mit Anschlusselementen versehenen Diversity-Antennenscheibe. Auf einer Glasscheibe werden die Anschlussflächen mehrerer Antennenelemente einschließlich Schirm- und Masseleitungen an einer Stelle im Randbereich der Scheibe örtlich benachbart zusammengeführt. Die Verbindungsflächen des Anschlusselements werden mit den Anschlussflächen der Glasscheibe verlötet.

DE 10 2004 056 866 A1 beschreibt einen Flachleiter mit einer Mehrzahl von Leiterbahnen, von denen zumindest eine als Erdungsleiter ausgebildet und mit einer Abschirmung verbunden ist. Der Flachleiter lässt sich durch ein Extrusionsverfahren einfach und kostengünstig herstellen.

DE 103 51 488 A1 offenbart eine Antennenanordnung zum Senden und Empfangen elektromagnetischer Signale, wobei die Antennenanordnung ein flächiges Trägersubstrat aus dielektrischem Material umfasst. Auf einer Oberfläche des Trägersubstrats ist eine erste Leiterbahn aufgebracht, die an ihrem einen Ende eine Kontaktstelle zum Ein- bzw. Ausleiten der Signale und an ihrem gegenüberliegenden Ende einen ersten Dipol besitzt. Auf der anderen Oberfläche des Trägersubstrats ist eine zweite Leiterbahn aufgebracht, welche an ihrem einen Ende eine Kontaktstelle zum Ein- bzw. Ausleiten der Signale und an ihrem gegenüberliegenden Ende einen zweiten Dipol aufweist. Der erste und der zweite Dipol bilden einen Kreuzdipol.

DE 197 35 395 A1 beschreibt eine Fensterscheibenantenne, deren Hauptelement durch eine für Licht transparente und in einem Bereich der Fensterscheibe flächig aufgebrachte dünne elektrisch leitfähige Schicht gebildet ist und die derart gebildete leitende Fläche an dem Fensterglas befestigt ist. Die auf der Fensterscheibe aufgebrachte leitende Fläche ist aus einer nur begrenzt leitfähigen Schicht mit nicht vernachlässigbarem Oberflächenwiderstand gebildet. An diese Schicht ist eine im wesentlichen flächenhaft ausgestattete Elektrode aus leitfähigem Material zum hochfrequenten Anschluss an diese Schicht gebildet, welche zumindest im Bereich ihrer Berandung mit der begrenzt leitenden Fläche hochfrequent verlustarm verbunden ist.

DE 103 01 352 B3 offenbart ein Lötanschlusselement für mindestens eine Kontaktfläche eines elektrischen Leiters, die mit einer auf einem Substrat vorgesehenen Leiterstruktur zu verlöten ist. Der elektrische Leiter ist mindestens auf der dem Substrat zuzuwendenden Seite von einer isolierenden Deckfolie überdeckt, Die Deckfolie ist im Bereich der Kontaktfläche mit einer Ausnehmung versehen, deren Rand die Kontaktfläche rings umgibt.

WO 2009/015 975 A1 beschreibt einen mehradrigen Flachleiter mit einem Lötanschlusselement zur Kontaktierung elektrisch leitender Strukturen, beispielsweise auf einer Glasscheibe. Das Lötanschlusselement enthält einen Klebstoff im Bereich rings um jede zu verlötende Kontaktstelle, um die Position des Lötanschlusselements zu fixieren und Kurzschlüsse durch geschmolzene Lotmasse zu verhindern.

DE 202 10 286 U1 beschreibt einen Adapter in Gestalt eines flexiblen Verbindungselements zur Anbindung von elektrisch leitenden Strukturen auf Kraftfahrzeug-Fensterscheiben an weiterführende Netzwerke außerhalb der Scheiben. Die elektrisch leitenden Strukturen sind beispielsweise Antennen. Der Adapter besteht aus einem flexiblen, folienartigen Trägermaterial auf dem Leiterbahnen verlaufen. Der Adapter umfasst einen Schuh aus nichtleitendem Material mit metallischen Federzungen, die auf Kontaktflächen der elektrisch leitenden Strukturen gepresst werden.

FR 2 913 141 A3 beschreibt einen flexiblen Flachleiter zur Kontaktierung von elektrisch leitfähigen Strukturen auf der Oberfläche einer Scheibe. Die einzelnen Leiterbahnen sind parallel nebeneinander verlaufend und zwischen zwei Kunststofffolien angeordnet, wobei eine der Kunststofffolien mit der Scheibe über eine Klebefläche verbunden ist.

DE 20 2004 019286 U1 offenbart ein Flachleiter-Außenanschlusselement für Fensterscheiben mit mindestens einer mit an oder in der Fensterscheibe angeordneten elektrischen Bauelementen elektrisch verbundenen und sich über den Rand der Scheiben fläche hinweg nach außen erstreckenden Leiterbahn und einer diese umgebenden Isolierung, die mit einer lokalen Verstärkung gegen mechanischen Verschleiß versehen ist. Die Verstärkung besteht aus einem glattflächigen und vorzugsweise oberflächliche Verletzungen selbstheilenden Material, dass auf der Isolierung haftet.

DE 20 2004 001446 U1 beschreibt eine Antennenanordnunq aus einer flexiblen Trägerfolie, in die elektrische Leiterstreifen eingebettet sind. Beiderseits der Leiterstreifen können sich geerdete Abschirmungen befinden.

Durch die Verwendung spezieller Hochfrequenzleiter, beispielsweise Koaxialleiter, welche neben einem Signalleiter mindestens einen Masseleiter mit sich führen, können Signalverluste vermieden werden. Solche Hochfrequenzleiter sind jedoch aufwändig und kostenintensiv und benötigen relativ viel Bauraum. Zudem erfordern sie eine gleichermaßen aufwändige Verbindungstechnik.

Demgegenüber besteht die Aufgabe der vorliegenden Erfindung darin, eine Antennenscheibe mit Flachleiter-Anschlusselement mit verbesserter Signalübertragung und geringer Anfälligkeit für Störsignale bereitzustellen. Die Antennenscheibe mit Flachleiter-Anschlusselement soll darüber hinaus einfach und kostengünstig herzustellen sein, über eine einfache Verbindungstechnik verfügen und unempfindlich gegenüber Lagetoleranzen beim Einbau in einen metallischen Rahmen oder eine Fahrzeugkarosserie sein. Diese und weitere Aufgaben werden nach dem Vorschlag der Erfindung durch eine Scheibenanordnung mit einem Flachleiter-Anschlusselement für eine Antennenstruktur mit den Merkmalen des unabhängigen Patentanspruchs gelöst. Vorteilhafte Ausgestaltungen der Erfindung sind durch die Merkmale der Unteransprüche angegeben.

Ein Verfahren zur Herstellung einer Scheibenanordnung mit einem Flachleiter-Anschlusselements und Antennenstruktur sowie die Verwendung einers Scheibenanordnung mit Flachleiter-Anschlusselements und Antennenstruktur gehen aus weiteren unabhängigen Patentansprüchen hervor.

In Kraftfahrzeugen ist der Antennenverstärker mit der elektrisch leitfähigen Fahrzeugkarosserie elektrisch verbunden, wobei durch diese elektrische Verbindung ein hochfrequenztechnisch wirksames Bezugspotenzial, im Folgenden Bezugsmasse genannt, für das Antennensignal vorgegeben wird. Die nutzbare Antennenspannung ergibt sich aus der Differenz zwischen dem Potenzial des Antennensignals und dem Potenzial der Bezugsmasse.

Bei dem Flachleiter-Anschlusselement ist eine Antennenstruktur in oder an einer Scheibe angeordnet. Der Flachleiter umfasst:
- eine Grundschicht,
- eine Leiterbahn, die oberhalb der Grundschicht angeordnet ist,
- eine erste dielektrische Schicht, die oberhalb der Leiterbahn angeordnet ist,
- eine Abschirmung, die zumindest abschnittsweise oberhalb der ersten dielektrischen Schicht angeordnet ist und
- eine zweite dielektrische Schicht, die oberhalb der Abschirmung angeordnet ist.

Die Leiterbahn ist über eine Anschlussfläche elektrisch leitend mit der Antennenstruktur verbunden, bevorzugt galvanisch oder kapazitiv. Der Flachleiter verläuft über den Rand der Scheibe nach außen. Außerhalb der Scheibe verläuft der Flachleiter zumindest abschnittsweise benachbart zu einem metallischen Rahmen. Die Abschirmung ist dadurch kapazitiv über den metallischen Rahmen mit einer Bezugsmasse gekoppelt.

Der Begriff "oberhalb" bezieht sich hier auf die Position in der Schichtenfolge des Flachleiters. Dies bedeutet, der Flachleiter umfasst folgende aufeinander folgende Schichten:
- eine Grundschicht,
- eine Leiterbahn, die auf der Grundschicht angeordnet ist,
- eine erste dielektrische Schicht, die auf der Leiterbahn und falls die Leiterbahn schmäler als die Grundschicht ist, auch auf der freiliegenden Grundschicht angeordnet ist,
- eine Abschirmung, die zumindest abschnittsweise auf der ersten dielektrischen Schicht angeordnet ist und
- eine zweite dielektrische Schicht, die auf der Abschirmung angeordnet ist.

Die verschiedenen Schichten des Flachleiters können durch zusätzliche Klebeschichten miteinander verklebt sein.

In einer vorteilhaften Ausgestaltung des Flachleiter-Anschlusselements ist die Abschirmung zwischen der Leiterbahn und dem metallischem Rahmen angeordnet. Der metallische Rahmen ist nicht Teil des Flachleiter-Anschlusselements sondern beispielsweise Teil eines Fensterrahmens oder einer Fahrzeugkarosserie. Die Abschirmung, die zweite dielektrische Schicht und ein Teilbereich des metallischen Rahmens bilden eine Kondensatoranordnung, über die die Abschirmung kapazitiv mit dem metallischen Rahmen gekoppelt ist.

In einer vorteilhaften Ausgestaltung des Flachleiter-Anschlusselements verläuft die Abschirmung des Flachleiters über mindestens 50%, bevorzugt über mindestens 75% und besonders bevorzugt über mindestens 90% der Fläche des Flachleiters außerhalb der Scheibe. Fläche des Flachleiters bedeutet in diesem Falle die Oberfläche einer flächenhaften Seite des Flachleiters. Die Abschirmung kann zur Verbesserung der Abschirmung auch im Bereich in oder auf der Scheibe angeordnet sein.

In einer vorteilhaften Ausgestaltung des Flachleiter-Anschlusselements umfasst der metallische Rahmen eine Fahrzeugkarosserie oder einen beweglichen metallischen Rahmen, insbesondere einen metallischen Fensterrahmen. Der metallische Rahmen muss nicht notwendigerweise geschlossen um die äußere Umrandung der Scheibe verlaufen. Ein metallischer Rahmen im Sinne der Erfindung umfasst auch einen metallischen und/oder elektrisch leitfähigen Abschnitt, beispielsweise eine Leiste, einen L-förmigen oder einen U-förmigen Rahmen, der als Bezugsmasse der Antennenstruktur dienen kann.

In einer vorteilhaften Ausgestaltung des Flachleiter-Anschlusselements ist die Abschirmung im Bereich einer Fläche von 30 mm² bis 200 mm² in einem Abstand von 0,02 mm bis 2 mm zu dem metallischen Rahmen angeordnet. Die Grundschicht, die erste dielektrische Schicht und/oder die zweite dielektrische Schicht haben eine relative Permittivitätszahl von 1 bis 6, bevorzugt von 2 bis 4 und besonders bevorzugt von 3 bis 3,5.

Zumindest die Abschirmung, die zweite dielektrische Schicht und der metallische Rahmen bilden einen Kondensator. In einer vorteilhaften Ausgestaltung des Flachleiter-Anschlusselements beträgt die Kapazität des Kondensators von 5 nF bis 10 pF und bevorzugt von 0,1 nF bis 2 nF. Durch den Kondensator wird ein Hochpass gebildet. Über den Hochpass wird elektromagnetische Störstrahlung oberhalb der Grenzfrequenz fG des Hochpasses von der Abschirmung zur Bezugsmasse geleitet.

In einer vorteilhaften Ausgestaltung des Flachleiter-Anschlusselements beträgt die Grenzfrequenz der Signalübertragung von der Abschirmung zur Bezugsmasse von 20 MHz bis 1000 MHz.

In einer vorteilhaften Ausgestaltung des Flachleiter-Anschlusselements enthält die Grundschicht, die erste dielektrische Schicht und/oder die zweite dielektrische Schicht einen Kunststoff, bevorzugt Polyimid (PI), Polyamid (PA), Polyethylen (PE), Polypropen (PP), Polybutylenterephtalat (PBT), Polycarbonat (PC), Polyethylenenterephtalat (PET), Polyethylennaphtalat (PEN), Polybutadien, Polyvinylchlorid (PVC) oder Polytetrafluorethen (PTFE) sowie Gemische und/oder Copolymere davon. Die Grundschicht, die erste dielektrische Schicht und/oder die zweite dielektrische Schicht können auch eine Lackschicht, bevorzugt Alkydharz, Acrylharz, Epoxidharz oder Polyurethan, oder einen Klebstoff, bevorzugt Acrylatklebstoff, Methylmethacrylatklebstoff, Polyuerthane, Polyolefine, Cyanacrylatklebstoff, Polyepoxide, Silikonkleber und/oder Silanvernetzender-Polymerklebstoff, RTV-Silikonkautschuk, HTV-Silikonkautschuk, peroxidischvernetzter-Silikonkautschuk und/oder additionsvernetzter-Silikonkautschuk sowie Gemische und/oder Copolymere davon, enthalten.

Die zweite dielektrische Schicht kann auch ein Gas, bevorzugt Luft enthalten, wobei der Abstand zwischen Abschirmung und metallischem Rahmen, beispielsweise durch Abstandshalter gebildet wird.

Des Weiteren kann die zweite dielektrische Schicht durch eine Kunststoffschicht oder eine Lackschicht auf dem metallischen Rahmen gebildet werden, beispielsweise einer Farbschicht auf der Fahrzeugkarosserie.

In einer vorteilhaften Ausgestaltung des Flachleiter-Anschlusselements enthält die Scheibe eine Einzelscheibe oder ein Verbundscheibe. Die Einzelscheibe oder die einzelnen Scheiben der Verbundscheibe enthalten beispielsweise ein Glas und/oder einen Kunststoff.

In einer vorteilhaften Ausgestaltung des Flachleiter-Anschlusselements enthält die Leiterbahn und/oder die Abschirmung eine Metallfolie, eine metallisierte Kunststofffolie, eine elektrisch leitfähige Kunststofffolie oder ein Metalldrahtgeflecht. Die Leiterbahn kann auch einen Metalldraht enthalten. Die Leiterbahn und/oder die Abschirmung enthalten bevorzugt ein elektrisch hochleitendes Metall, besonders bevorzugt Kupfer, Aluminium, Zinn, Gold, Silber oder Gemische davon.

In einer vorteilhaften Ausgestaltung des Flachleiter-Anschlusselements hat die Abschirmung eine größere Breite als die Breite der Leiterbahn. Das Verhältnis zwischen Breite der Abschirmung und Breite der Leiterbahn bestimmt unter anderem die Impedanz des Flachleiters und beträgt von 2:1 bis 1000:1, bevorzugt von 5:1 bis 30:1 und besonders bevorzugt von 10:1 bis 20:1.

In einer vorteilhaften Ausgestaltung des Flachleiter-Anschlusselements umfasst die Antennenstruktur mindestens einen Linienstrahler, einen Flächenstrahler oder eine Hybridstruktur aus Linienstrahler und Flächenstrahler.

Der Flächenstrahler umfasst zumindest eine elektrisch leitfähige, vorzugsweise transparente Beschichtung, die zumindest eine innenliegende oder außenliegende Seite der Einzelscheibe oder der Verbundscheibe zumindest abschnittsweise bedeckt und zumindest abschnittsweise als flächenförmige Antenne zum Empfangen von elektromagnetischen Wellen dient. Die leitfähige Beschichtung ist zur Verwendung als Flächenantenne geeignet ausgebildet und kann zu diesem Zweck die Scheibe großflächig bedecken. Der Antennenaufbau umfasst weiterhin mindestens eine mit der leitfähigen Beschichtung elektrisch gekoppelte Koppelektrode zum Auskoppeln von Antennensignalen aus der Flächenantenne. Die Koppelelektrode kann beispielsweise kapazitiv oder galvanisch mit der leitfähigen Beschichtung gekoppelt sein.

Der Linienstrahler umfasst zumindest einen linienförmigen Antennenleiter, der beispielsweise in Form eines Drahtes innerhalb einer Verbundscheibe verlegt ist oder aus einer metallischen Druckpaste, beispielsweise im Siebdruckverfahren, auf zumindest eine Seite einer Einzelscheibe oder einer einzelnen Scheibe einer Verbundscheibe gedruckt ist.

Bei einem hybriden Antennenaufbau werden ein Flächenstrahler und ein Linienstrahler miteinander kombiniert und das Antennensignal vorzugsweise an einem gemeinsamen Antennenfußpunkt bereitgestellt. Zu diesem Zweck sind der Antennenleiter und der gemeinsame Antennenfußpunkt durch einen zweiten Verbindungsleiter miteinander elektrisch leitend verbunden.

Ein weiterer Aspekt umfasst eine Scheibe mit einem Flachleiter-Anschlusselement und einer in oder an der Scheibe angeordneten Antennenstruktur.

Ein weiterer Aspekt der Erfindung umfasst ein Verfahren zur Herstellung einer Scheibenanordnung mit einem Flachleiter-Anschlusselements für eine Antennenstruktur, wobei:
a) eine Leiterbahn eines Flachleiters mit einer Antennenstruktur auf einer ersten Scheibe verbunden wird,
b) der Flachleiter über einen äußeren Rand der ersten Scheibe herausgeführt wird,
c) die erste Scheibe in einen metallischen Rahmen eingebaut wird,
wobei eine Abschirmung des Flachleiters über mindestens eine zweite dielektrische Schicht zumindest abschnittsweise benachbart zu dem metallischen Rahmen angeordnet wird und die Abschirmung kapazitiv über den metallischen Rahmen mit einer Bezugsmasse gekoppelt wird.

In einer weiteren Ausführungsform des erfindungsgemäßen Verfahrens wird im zweiten Schritt b) der Flachleiter über einen äußeren Rand einer ersten Scheibe herausgeführt und die erste Scheibe über eine thermoplastische Klebeschicht mit einer zweiten Scheibe flächig verbunden.

Ein weiterer Aspekt der Erfindung umfasst die Verwendung eine Scheibenanordnung mit einem Flachleiter-Anschlusselement für eine Antennenstruktur in einer Fahrzeugkarosserie oder einer Fahrzeugtür eines Fortbewegungsmittels zu Lande, zu Wasser oder in der Luft, in einem metallischen Rahmen eines Gebäudes, bevorzugt einer Außenfassade oder eines Gebäudefensters oder in einem funktionalen und/oder dekorativen Einzelstück und als Einbauteil in Möbeln und Geräten.

Es versteht sich, dass die verschiedenen Ausgestaltungen des Antennenaufbaus einzeln oder in beliebigen Kombinationen realisiert sein können. Insbesondere sind die vorstehend genannten und nachstehend zu erläuternden Merkmale nicht nur in den angegebenen Kombinationen, sondern auch in anderen Kombinationen oder in Alleinstellung einsetzbar, ohne den Rahmen der vorliegenden Erfindung zu verlassen.

Die Erfindung betrifft eine Scheibenanordnung mit Flachleiter-Anschlusselement mit einer Scheibe in einem mit einer Bezugsmasse verbundenen metallischen Rahmen, beispielsweise eine Windschutzscheibe oder Heckscheibe in einer Kraftfahrzeugkarosserie, einer in oder an der Scheibe angeordneten Antennenstruktur und einem mit der Antennenstruktur verbundenen Flachleiter-Anschlusselement.

Die erfindungsgemäße Scheibenanordnung mit Flachleiter-Anschlusselement für eine Antennenstruktur umfasst mindestens:
- eine Scheibe, die in einem metallischen Rahmen angeordnet ist,
- eine Antennenstruktur, die in oder an der Scheibe angeordnet ist,
- einen Flachleiter mit
   - einer Grundschicht,
   - einer Leiterbahn, die oberhalb der Grundschicht angeordnet ist,
   - einer ersten dielektrischen Schicht, die oberhalb der Leiterbahn angeordnet ist,
   - einer Abschirmung, die zumindest abschnittsweise oberhalb der ersten dielektrischen Schicht angeordnet ist und
   - einer zweiten dielektrischen Schicht, die oberhalb der Abschirmung angeordnet ist,
   und der metallische Rahmen mit einer Bezugsmasse verbunden ist,
   wobei die Leiterbahn mit der Antennenstruktur elektrisch leitend verbunden ist und der Flachleiter über den Rand der Scheibe nach außen verläuft und
   der Flachleiter zumindest abschnittsweise benachbart zu dem metallischen Rahmen angeordnet ist und die Abschirmung kapazitiv über den metallischen Rahmen mit der Bezugsmasse gekoppelt ist.

Es versteht sich, dass die Ausgestaltungsmerkmale des Flachleiter-Anschlusselements auch für das Flachleiter-Anschlusselement in der Scheibenanordnung gelten.

Die Erfindung wird nachfolgend anhand einer Zeichnung und eines Beispiels näher erläutert. Die Zeichnung ist nicht vollständig maßstabsgetreu. Die Erfindung wird durch die Zeichnung in keiner Weise eingeschränkt. Es zeigen:
Figur 1A eine Querschnittsdarstellung eines Flachleiter-Anschlusselements für eine Antennenstruktur,
Figur 1B eine Querschnittdarstellung entlang der Schnittlinie A-A' aus Figur 1A,
Figur 2 eine schematische Darstellung eines Flachleiters in einer Draufsicht,
Figur 3 eine Querschnittdarstellung entlang der Schnittlinie B-B' aus Figur 2,
Figur 4 eine Querschnittdarstellung entlang der Schnittlinie D-D' aus Figur 3,
Figur 5 eine Querschnittdarstellung entlang der Schnittlinie E-E' aus Figur 3,
Figur 6 eine Querschnittdarstellung eines weiteren Ausführungsbeispiels eines Flachleiters,
Figur 7 ein Flussdiagramm eines Ausführungsbeispiels des erfindungsgemäßen Verfahrens und
Figur 8 ein Diagramm mit einer Vergleichsmessung.

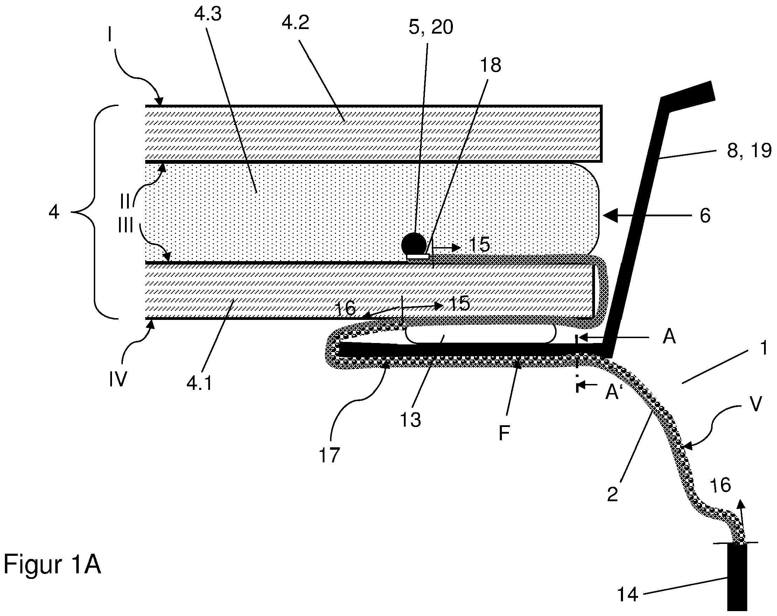

Figur 1A zeigt eine Querschnittsdarstellung einer Scheibenanordnung mit einem Flachleiter-Anschlusselement 1 für eine Antennenstruktur 5, wobei die Antennenstruktur 5 im Inneren einer Verbundscheibe 4 angeordnet ist.

Die Verbundscheibe 4 umfasst zwei Einzelscheiben, nämlich eine starre erste Scheibe 4.1 und eine starre zweite Scheibe 4.2, die über eine thermoplastische Klebeschicht 4.3 fest miteinander verbunden sind. Die Einzelscheiben haben in etwa eine gleiche Größe und sind beispielsweise aus Glas, insbesondere Floatglas, Gussglas und Keramikglas gefertigt, wobei sie gleichermaßen aus einem nichtgläsernen Material, beispielsweise Kunststoff, insbesondere Polystyrol (PS), Polyamid (PA), Polyester (PE), Polyvinylchlorid (PVC), Polycarbonat (PC), Polymethylmethacrylat (PMA) oder Polyethylenterephtalat (PET) hergestellt sein können. Allgemein kann jedes Material mit hinreichender Transparenz, ausreichender chemischer Beständigkeit sowie geeigneter Form- und Größenstabilität verwendet werden. Für eine anderweitige Verwendung, beispielsweise als Dekorteil, wäre es auch möglich, die erste Scheibe 4.1 und die zweite Scheibe 4.2 aus einem flexiblen und/oder einem nichttransparenten Material herzustellen. Die jeweilige Dicke der ersten Scheibe 4.1 und der zweiten Scheibe 4.2 kann je nach Verwendung breit variieren und kann für Glas beispielsweise im Bereich von 1 bis 24 mm liegen.

In üblicher Weise sind die Scheibenflächen mit den römischen Ziffern I-IV bezeichnet, wobei Seite IV der Außenseite der ersten Scheibe 4.1, Seite III der Innenseite der ersten Scheibe 4.1, Seite II der Innenseite der zweiten Scheibe 4.2 und Seite I der Außenseite der zweiten Scheibe 4.2 der Verbundscheibe 4 entspricht. In der Verwendung als Windschutzscheibe ist die Seite I der äußeren Umgebung und die Seite IV der Fahrgastzelle des Kraftfahrzeugs zugewandt.

Die Klebeschicht 4.3 zur Verbindung von erster Scheibe 4.1 und zweiter Scheibe 4.2 enthält vorzugsweise einen klebenden Kunststoff bevorzugt auf Basis von Polyvinylbutyral (PVB), Ethylen-Vinyl-Acetat (EVA) oder Polyurethan (PU). Die Klebeschicht 4.3 kann beispielsweise auch als Trilayer ausgebildet sein. Bei einem Trilayer ist eine Folie, die beispielsweise Polyethylenterephtalat (PET) enthält, zwischen zwei Schichten eines klebenden Kunststoffs angeordnet. Die PET-Folie kann als Träger einer leitfähigen Schicht dienen und kann damit Bestandteil der Antenne sein, insbesondere des Flächenstrahlers.

Die Verbundscheibe 4 ist für sichtbares Licht beispielsweise im Wellenlängenbereich von 350 nm bis 800 nm transparent, wobei unter dem Begriff "Transparenz" eine Lichtdurchlässigkeit von mehr als 50%, vorzugsweise mehr als 70% und insbesondere bevorzugt mehr als 80% zu verstehen ist.

Die Verbundscheibe 4 ist über einen Klebestrang 13 in einen metallischen Rahmen 8, beispielsweise eine Fahrzeugkarosserie 19 oder Fahrzeugtür eingeklebt. Die Verbundscheibe 4 dient beispielsweise als Windschutzscheibe eines Kraftfahrzeugs, wobei sie aber auch anderweitig verwendet werden kann.

Weiterhin ist die zweite Scheibe 4.2 mit einer opaken Farbschicht versehen, die auf der Seite II aufgebracht ist und einen rahmenförmig umlaufenden Maskierungsstreifen bildet, welcher in den Figuren nicht näher dargestellt ist. Die Farbschicht besteht vorzugsweise aus einem elektrisch nicht-leitenden, schwarz eingefärbten Material, das in die erste 4.1 oder die zweite Scheibe 4.2 eingebrannt werden kann. Der Maskierungsstreifen verhindert einerseits die Sicht auf den Klebestrang 13, mit dem die Verbundscheibe 4 in die Fahrzeugkarosserie 19 eingeklebt ist, andererseits dient er als UV-Schutz für das verwendete Klebematerial.

Innerhalb einer Randzone der Verbundscheibe 4 befindet sich, eingebettet in die Klebeschicht 4.3, eine Antennenstruktur 5 in Form eines linienförmigen, ungeschirmten Antennenleiters 5. Der Antennenleiter 5 dient als Linienantenne zum Empfangen von elektromagnetischen Wellen, vorzugsweise im Frequenzbereich der terrestrischen Rundfunkbänder II bis V und ist zu diesem Zweck geeignet ausgebildet. Im vorliegenden Ausführungsbeispiel ist der Antennenleiter 5 in Form eines Drahts ausgeführt, der vorzugsweise länger als 100 mm und schmaler als 1 mm ist. Die Linienleitfähigkeit des Antennenleiters 5 ist vorzugsweise geringer als 20 Ohm/m, besonders bevorzugt geringer als 10 Ohm/m. Im gezeigten Ausführungsbeispiel beträgt die Länge des Antennenleiters 5 ca. 650 mm bei einer Breite von 0,75 mm. Seine Linienleitfähigkeit beträgt beispielsweise 5 Ohm/m.

Der Antennenleiter 5 hat einen hinreichenden Abstand zum Scheibenrand 6, wodurch einer Verkopplung mit der Fahrzeugkarosserie 19 entgegen gewirkt wird.

In einem weiteren Ausführungsbeispiel umfasst die Antennenstruktur 5 eine Flächenantenne. Die Flächenantenne enthält eine transparente leitfähige Beschichtung, die beispielsweise auf der Seite III der zweiten Scheibe 4.2 angeordnet ist. In einem weiteren Ausführungsbeispiel umfasst die Antennenstruktur 5 einen hybriden Antennenaufbau aus einer Flächenantenne und einer Linienantenne, deren Signale über einen gemeinsamen Antennenfußpunkt 20 nach außen geführt werden.

In dem hybriden Antennenaufbau kann die transparente, elektrisch leitfähige Beschichtung, je nach stofflicher Zusammensetzung, weitere Funktionen erfüllen. Beispielsweise kann sie als Wärmestrahlen-reflektierende Beschichtung zum Zwecke eines Sonnenschutzes, Thermoregulierung oder Wärmeisolation oder als Heizschicht zum elektrischen Beheizen der Verbundscheibe 4 dienen. Diese Funktionen sind für die vorliegende Erfindung von untergeordneter Bedeutung.

Die Antennenstruktur 5 ist über ihren Antennenfußpunkt 20 mit der elektrischen Anschlussfläche 18 der Leiterbahn 3 eines Flachleiters 2 verbunden. Die Verbindung zwischen Antennenfußpunkt 20 und elektrischer Anschlussfläche 18 erfolgt beispielsweise durch Löten, Ultraschallbonden, Kleben oder Klemmen.

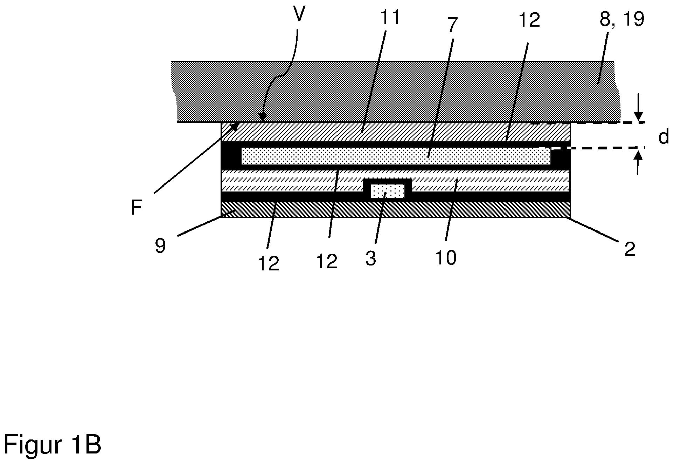

Figur 1B zeigt eine Querschnittdarstellung des erfindungsgemäßen Flachleiters 2 entlang der Schnittlinie A-A' aus Figur 1A. Der Flachleiter 2 umfasst eine Grundschicht 9, die eine Folie eines isolierenden oder dielektrischen Materials, bevorzugt einen Kunststoff wie Polyimid (PI) enthält. Die Grundschicht 9 weist bevorzugt eine Dicke von 10 µm bis 500 µm und beispielsweise 25 µm auf.

Oberhalb der Grundschicht 9 ist eine Leiterbahn 3 angeordnet. Die Leiterbahn 3 enthält eine Folie eines elektrisch hochleitenden Metalls, beispielsweise Kupfer. Die Dicke der Leiterbahn 3 beträgt von 10 µm bis 500 µm und beispielsweise 35 µm.

Oberhalb der Leiterbahn 3 ist eine erste dielektrische Schicht 10 angeordnet. Die erste dielektrische Schicht 10 enthält eine Folie eines dielektrischen Materials, bevorzugt einen Kunststoff wie Polyimid (PI). Die erste dielektrische Schicht 10 weist eine Dicke von 10 µm bis 2000 µm und beispielsweise 100 µm auf.

Oberhalb der ersten dielektrischen Schicht 10 ist eine Abschirmung 7 angeordnet. Die Abschirmung 7 enthält eine Folie eines elektrisch hochleitenden Metalls, beispielsweise Kupfer. Die Dicke der Abschirmung 7 beträgt von 10 µm bis 500 µm und beispielsweise 35 µm.

Die Leiterbahn 3, die erste dielektrische Schicht 10 und die Abschirmung 7 bilden einen sogenannten asymmetrischen Mikrostreifenleiter, in dem die Signale der Antennenstruktur 5 in günstiger Weise geführt werden.

Oberhalb der Abschirmung 7 ist eine zweite dielektrische Schicht 11 angeordnet. Die zweite dielektrische Schicht 11 enthält eine Folie eines dielektrischen Materials, bevorzugt einen Kunststoff wie Polyimid (PI). Die zweite dielektrische Schicht 11 weist eine Dicke von 10 µm bis 500 µm und beispielsweise 25 µm auf.

Die Grundschicht 9, die Leiterbahn 3, die erste dielektrische Schicht 10, die Abschirmung 7 und die zweite dielektrische Schicht 11 sind durch geeignete Klebeschichten 12 miteinander verklebt, beispielsweise durch einen Acrylat-Klebstoff.

Der Flachleiter 2 verläuft über den Rand 6 der Verbundscheibe 4 nach außen. Der Flachleiter 2 ist im Bereich der Fläche F benachbart zur Fahrzeugkarosserie 19 angeordnet. Dabei weist die Oberseite V des Flachleiters 2 zur Fahrzeugkarosserie 19. Die Oberseite V des Flachleiters 2 ist die außenliegende Seite der zweiten dielektrischen Schicht 11. Unterhalb der zweiten dielektrischen Schicht 11 ist die Abschirmung 7 angeordnet. Der Abstand d der Abschirmung 7 zur Fahrzeugkarosserie 19 wird durch die Dicke der zweiten dielektrischen Schicht 11 und die Dicke der Klebeschicht 12 zwischen Abschirmung 7 und zweiter dielektrischen Schicht 11 bestimmt.

Die Abschirmung 7, die zweite dielektrische Schicht 11, die Klebeschicht 12 und die Fahrzeugkarosserie 19 bilden im Bereich der Fläche F einen Kondensator. Die Kapazität C des Kondensators ergibt sich durch die Fläche F, die Dicke der zweiten dielektrischen Schicht 11 und deren Permittivitätszahl sowie die Dicke der Klebeschicht 12 zwischen Abschirmung 7 und zweiter dielektrischen Schicht 11 und der Permittivitätszahl der Klebeschicht 12. Durch den Kondensator wird die Abschirmung 7 an die Fahrzeugkarosserie 19 und damit an die Bezugsmasse kapazitiv gekoppelt. Durch den Kondensator wird ein Hochpass gebildet, über den elektromagnetische Störstrahlung oberhalb der Grenzfrequenz fG des Hochpasses zur Bezugsmasse geleitet wird.

Die Fläche F, bei der sich die Abschirmung 7 in einem Abstand d von der Fahrzeugkarosserie19 befindet, beträgt bevorzugt von 30 mm² bis 200 mm². Die Breite der Fläche F entspricht beispielsweise einer Breite der Abschirmung 7 von bA = 12 mm. Die Länge der Fläche F beträgt beispielsweise 20 mm. Die Fläche F beträgt beispielsweise 240 mm². Der Abstand d entspricht der Dicke der zweiten dielektrischen Schicht 11 und beträgt beispielsweise 25 µm. Unter Vernachlässigung der Klebeschicht 12 zwischen Abschirmung 7 und zweiter dielektrischer Schicht 11 ergibt sich eine Kapazität C von beispielsweise 0,3 nF. Der Widerstand der Leiterbahn 2 beträgt beispielsweise etwas 2 Ohm. Die Grenzfrequenz fG des durch den Kondensator gebildeten Hochpass beträgt beispielsweise fG = 1/(2*Pi*R*C) ≈ 275 MHz.

In einer vorteilhaften Ausgestaltung des erfindungsgemäßen Flachleiter-Anschlusselements 1 kann die Oberseite V des Flachleiters 2 über eine weitere Klebeschicht mit der Fahrzeugkarosserie 19 verbunden sein.

In einer weiteren vorteilhaften Ausgestaltung erfindungsgemäßen Flachleiter-Anschlusselements 1 kann die Oberseite V des Flachleiters 2 auf der der Fahrzeugkarosserie 19 abgewandten Seite angeordnet sein. Die Abschirmung 7 wird dann über die erste dielektrische Schicht 10 und die Grundschicht 9 sowie den dazwischen angeordneten Klebeschichten 12 mit der Fahrzeugkarosserie 19 kapazitiv gekoppelt.

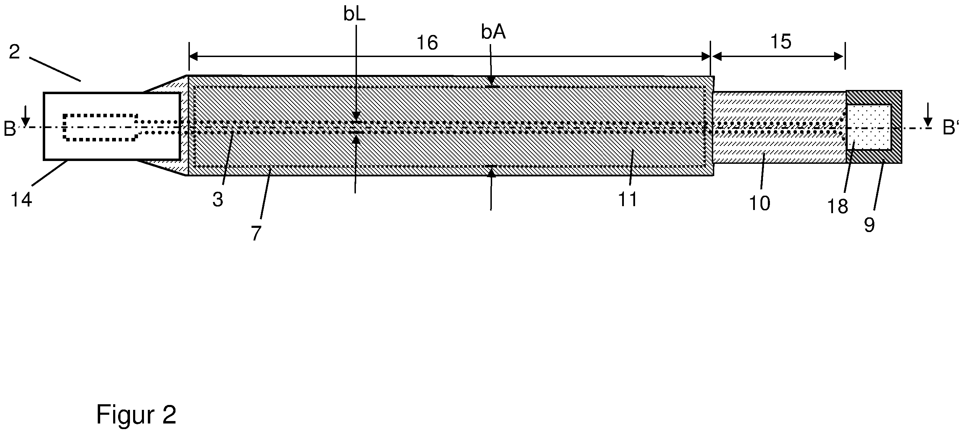

Figur 2 zeigt eine Draufsicht auf einen erfindungsgemäßen Flachleiter 2. Die Positionen der Leiterbahn 3 und der Abschirmung 7 im Inneren des Flachleiters 2 sind durch gepunktete Linien dargestellt. Der Flachleiter 2 weist an einem Ende eine elektrische Anschlussfläche 18 der Leiterbahn 3 auf. Der Flachleiter 2 weist an seinem anderen Ende einen Stecker 14 auf. Der Stecker 14 ist mit der Leiterbahn 3 verbunden. Über den Stecker 14 kann das Antennensignal an eine weitere Verbindungsleitung, beispielsweise ein geschirmtes Koaxialkabel, oder direkt an den Eingang einer Empfangselektronik geleitet werden.

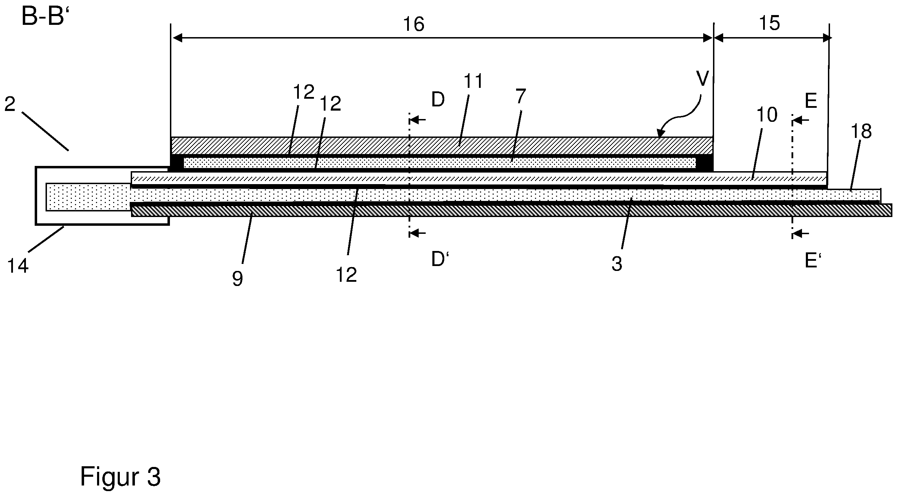

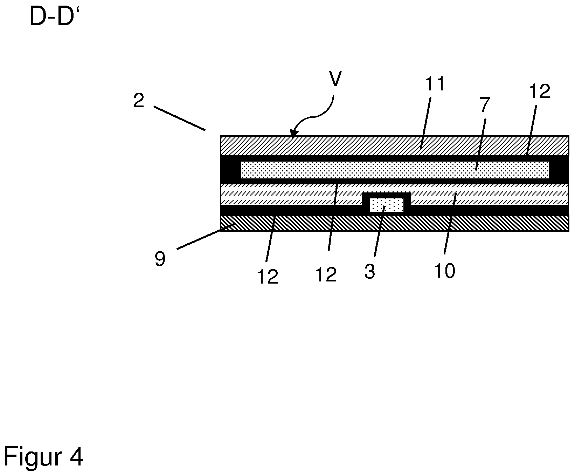

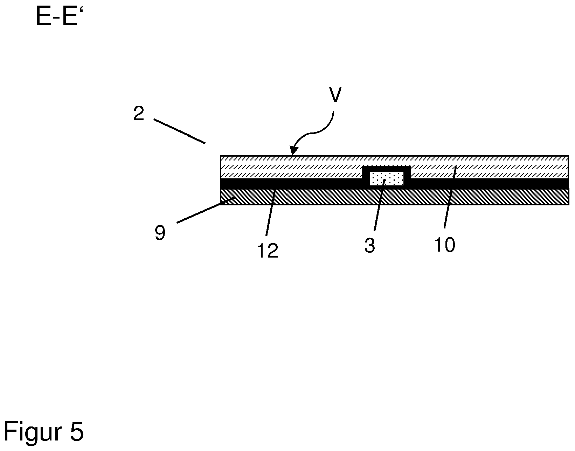

In Figur 3 ist eine Querschnittdarstellung entlang der Schnittlinie B-B' aus Figur 2 dargestellt. Der Flachleiter 2 weist einen Bereich 16 mit Abschirmung 7 und einen Bereich 15 ohne Abschirmung 7 auf. Figur 4 zeigt eine Querschnittdarstellung des Bereichs 16 mit Abschirmung 7 entlang der Schnittlinie D-D' aus Figur 3 und Figur 5 eine Querschnittdarstellung entlang der Schnittlinie E-E' aus Figur 3. Im Bereich 15 ohne Abschirmung 7 hat der Flachleiter 2 eine geringere Dicke und ist überwiegend innerhalb der Verbundscheibe 4 angeordnet.

Die Breite bL der Leiterbahn 3 beträgt von 0,01 mm bis 20 mm und beispielsweise 0,3 mm. Die Leiterbahn ist im dargestellten Ausführungsbeispiel entlang der Mittellinie der Grundschicht 9 angeordnet.

Die Breite bA der Abschirmung 7 beträgt von 0,02 mm bis 30 mm und beispielsweise 12 mm. Die Breite bA der Abschirmung 7 ist bevorzugt um einen Faktor von 5 bis 30 größer als die Breite bL der Leiterbahn 3.

Die Breite der Grundschicht 9, der ersten dielektrischen Schicht 10 und der zweiten dielektrischen Schicht 11 ist bevorzugt um 0,5 mm bis 5 mm breiter als die Breite bA der Abschirmung 7 und beträgt beispielsweise 15 mm. Durch den überstehenden Rand wird eine sichere elektrische Isolation und ein Schutz vor Korrosion der Leiterbahn 3 und der Abschirmung 7 erzielt.

Die Permittivitätszahl der Grundschicht 9, der ersten dielektrischen Schicht 10 und der zweiten dielektrischen Schicht 11 beträgt von 1 bis 6, bevorzugt von 3 bis 4 und beispielsweise 3,4. Die Permittivitätszahl des Klebers der Klebeschichten 12 beträgt beispielsweise etwa 3.

Die Breiten und Dicken der Grundschicht 9, der ersten dielektrischen Schicht 10 und der zweiten dielektrischen Schicht 11, der Klebeschichten 12, der Leiterbahn 3 und der Abschirmung 7 sind so gewählt, dass die Leitungsimpedanz des Folienleiters 2 etwa 50 Ohm beträgt. Die Leitungsimpedanz des Folienleiters 2 wird dadurch an die Eingangsimpedanz handelsüblicher Antennenverstärker angepasst.

Die Leitungsimpedanz des Folienleiters 2 wird im Wesentlichen durch die zu einander ortsfeste Anordnung von Leiterbahn 2 und Abschirmung 7 bestimmt. Dadurch ist der erfindungsgemäße Flachleiter 2 unempfindlich gegenüber Lagetoleranzen beim Einbau in die Fahrzeugkarosserie 19.

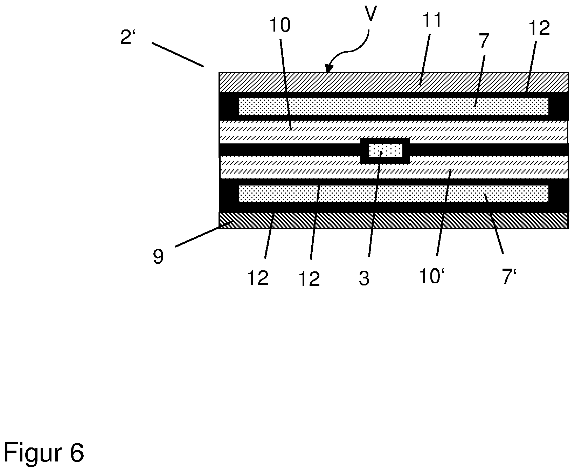

Figur 6 zeigt eine Querschnittdarstellung eines weiteren Ausführungsbeispiels eines erfindungsgemäßen Flachleiters 2'. Der Flachleiter 2' ist in seinem abgeschirmten Bereichs 16 als symmetrischer Mikrostreifenleiter ausgestaltet. Um unnötige Wiederholungen zu vermeiden, werden lediglich die Unterschiede zu dem Ausführungsbeispiel der Figur 4 beschrieben und ansonsten wird auf die dort gemachten Ausführungen Bezug genommen. Eine weitere Abschirmung 7' ist zwischen der Grundschicht 9 und Leiterbahn 3 des Flachleiters 2' angeordnet. Eine weitere erste dielektrische Schicht 10' ist zwischen Abschirmung 7' und Leiterbahn 3 angeordnet. Bei dieser Ausführungsform des erfindungsgemäßen Flachleiters 2' wird die Leiterbahn 3 sowohl auf der Unterseite als auch auf der Oberseite abgeschirmt. Die Abschirmung 7 ist in erfindungsgemäßer Weise kapazitiv über die Fahrzeugkarosserie 19 an die Bezugsmasse angekoppelt. Die Abschirmung 7' ist durch die benachbarte flächige Anordnung zur Abschirmung 7 mit dieser kapazitiv gekoppelt. Durch diese kapazitive Kopplung ist auch die Abschirmung 7' mit der Bezugsmasse kapazitiv gekoppelt. In einer vorteilhaften Ausführungsform des Flachleiters 2' ist die Abschirmung 7 mit der Abschirmung 7' galvanisch verbunden. Die galvanische Verbindung erfolgt beispielsweise durch eine Verbindung der Abschirmungen 7 und 7' in deren Randbereich.

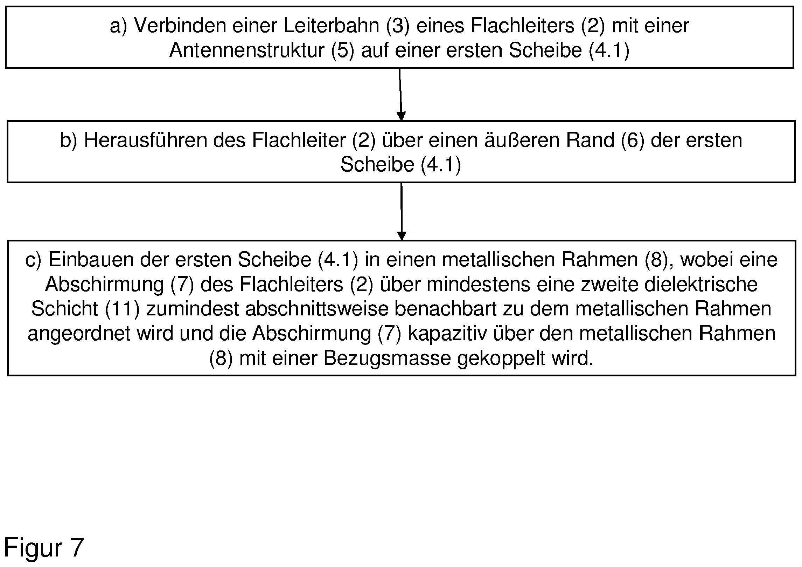

Figur 7 zeigt ein Flussdiagramm eines Ausführungsbeispiels des erfindungsgemäßen Verfahrens.

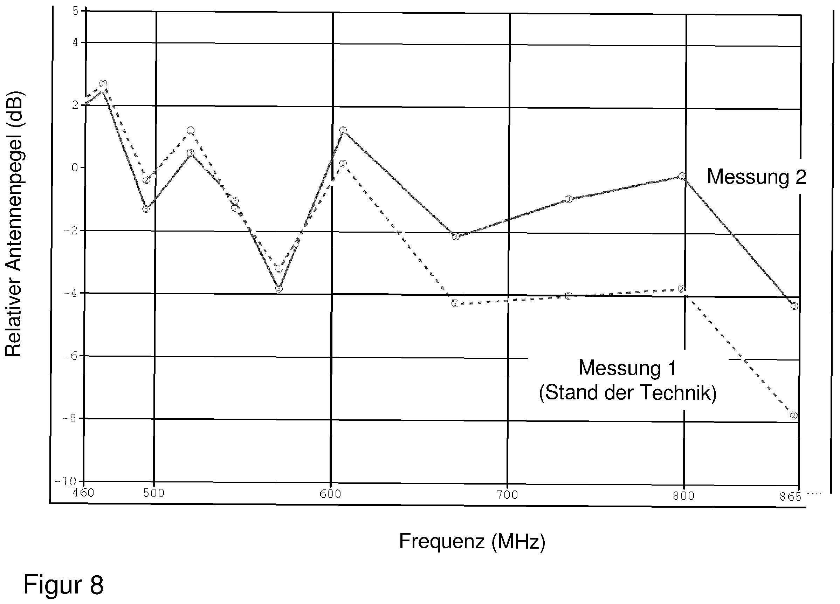

Figur 8 zeigt das Diagramm einer Vergleichsmessung zwischen einem Flachleiter-Anschlusselement nach dem Stand der Technik (Messung 1) und einem erfindungsgemäßen Flachleiter-Anschlusselement 1 (Messung 2). Die Antennenstruktur 5 war ein Hybridaufbau aus einer Flächenantenne und einer Linienantenne. Im Diagramm ist der relative Antennenpegel über der Frequenz der eingestrahlten hochfrequenten Strahlung dargestellt. Die hochfrequente Strahlung war horizontal polarisiert. Der im Diagramm dargestellte relative Antennenpegel ist eine Mittelung über die Antennenpegel des Richtdiagramms.

Der relative Antennenpegel gemessen an einem Flachleiter-Anschlusselement nach dem Stand der Technik (Messung 1), zeigt ab einer Frequenz von etwa 600 MHz eine deutlich größere Abschwächung als der relative Antennenpegel gemessen an einem erfindungsgemäßen Flachleiter-Anschlusselement 1. Der relative Antennenpegel eines Flachleiter-Anschlusselement nach dem Stand der Technik (Messung 1) ist im Vergleich mit einem erfindungsgemäßen Flachleiter-Anschlusselement 1 bei einer Frequenz von beispielsweise 800 MHz um 4 dB abgeschwächt. Das erfindungsgemäße Flachleiter-Anschlusselement 1 ist deshalb besser geeignet hochfrequente Signale, wie Signale für den terrestrischen Fernsehempfang, weiterzuleiten als ein Flachleiter-Anschlusselement nach dem Stand der Technik.

Das erfindungsgemäße Flachleiter-Anschlusselement 1 ist einfach und kostengünstig herzustellen. Da die Abschirmung 7 des Flachleiter-Anschlusselements 1 kapazitiv an die Bezugsmasse angekoppelt ist, ist neben dem Anschluss der Leiterbahn 3 keine weitere Verbindungstechnik notwendig. Eine Scheibe mit erfindungsgemäßem Flachleiter-Anschlusselement 1 kann einfach und schnell in ein Fahrzeug eingebaut werden. Gleichzeitig Leitungsimpedanz des erfindungsgemäßen Flachleiter-Anschlusselements 1 unempfindlich gegenüber Lagetoleranzen beim Einbau in die Fahrzeugkarosserie 19.

Dieses Ergebnis war für den Fachmann unerwartet und überraschend.

### Bezugszeichenliste

- 1: Scheibe mit Flachleiter-Anschlusselement
- 2, 2': Flachleiter
- 3: Leiterbahn
- 4: Scheibe, Verbundscheibe
- 4.1: erste Scheibe
- 4.2: zweite Scheibe
- 4.3: thermoplastische Klebeschicht
- 5: Antennenstruktur
- 6: Rand der Scheibe 4
- 7, 7': Abschirmung
- 8: metallischer Rahmen
- 9: Grundschicht
- 10, 10': erste dielektrische Schicht
- 11: zweite dielektrische Schicht
- 12: Klebeschicht
- 13: Klebestrang, Klebeverbindung mit Fahrzeugkarosserie 19
- 14: Stecker
- 15: nicht abgeschirmter Bereich
- 16: abgeschirmter Bereich
- 17: Fläche der kapazitiven Kopplung
- 18: elektrische Anschlussfläche der Leiterbahn 3
- 19: Fahrzeugkarosserie
- 20: Antennenfu ßpunkt

- A-A': Schnittlinie
- B-B': Schnittlinie
- D-D': Schnittlinie
- E-E': Schnittlinie
- bA: Breite der Abschirmung 7
- bL: Breite der Leiterbahn 3
- d: Abstand zwischen Abschirmung 7 und metallischem Rahmen 8
- C: Kapazität
- fG: Grenzfrequenz
- R: Widerstand der Leiterbahn 2
- I: Außenseite der zweiten Scheibe 4.2, Außenseite der Scheibe 4
- II: Innenseite der zweiten Scheibe 4.2
- III: Innenseite der ersten Scheibe 4.1
- IV: Außenseite der ersten Scheibe 4.1, Innenseite der Scheibe 4
- V: Abgeschirmte Seite des Flachleiters 2

## Patentansprüche

1. Scheibenanordnung, umfassend:
- eine Scheibe (4),
- einen metallischen Rahmen, wobei die Scheibe (4) in dem metallischen Rahmen (8) angeordnet ist und wobei der metallische Rahmen (8) mit einer Bezugsmasse verbunden ist,
- eine Antennenstruktur (5), die in oder an der Scheibe (4) angeordnet ist,
- ein mit der Antennenstruktur (5) verbundenes Flachleiter-Anschlusselement mit
einem Flachleiter (2) mit
- einer Grundschicht (9),
- einer Leiterbahn (3), die auf der Grundschicht (9) angeordnet ist,
- einer ersten dielektrischen Schicht (10), die auf der Leiterbahn (3) angeordnet ist,
- einer Abschirmung (7), die zumindest abschnittsweise auf der ersten dielektrischen Schicht (10) angeordnet ist und
- einer zweiten dielektrischen Schicht (11), die auf der Abschirmung (7) angeordnet ist,
wobei
die Leiterbahn (3) mit der Antennenstruktur (5) elektrisch leitend verbunden ist und der Flachleiter (2) über den Rand (6) der Scheibe (4) nach außen verläuft und
der Flachleiter (2) zumindest abschnittsweise benachbart zu dem metallischen Rahmen (8) angeordnet ist und die Abschirmung (7) kapazitiv über den metallischen Rahmen (8) mit der Bezugsmasse gekoppelt ist.

2. Scheibenanordnung nach Anspruch 1, wobei die Abschirmung (7) zwischen der Leiterbahn (3) und dem metallischen Rahmen (8) angeordnet ist.

3. Scheibenanordnung nach Anspruch 1 oder 2, wobei sich die Abschirmung (7) über mindestens 50%, bevorzugt über mindestens 75% und besonders bevorzugt über mindestens 90% der Fläche des Flachleiters (2) außerhalb der Scheibe (4) erstreckt.

4. Scheibenanordnung nach einem der Ansprüche 1 bis 3, wobei der metallische Rahmen (8) eine Fahrzeugkarosserie (19) oder einen beweglichen metallischen Rahmen, insbesondere einen metallischen Fensterrahmen, umfasst.

5. Scheibenanordnung nach einem der Ansprüche 1 bis 4, wobei die Abschirmung (7) mit einer Fläche (F) von 30 mm² bis 200 mm² in einem Abstand (d) von 0,02 mm bis 2 mm zu dem metallischen Rahmen (8) angeordnet ist und die zweite dielektrische Schicht (11) eine relative Permittivitätszahl von 1 bis 6 hat.

6. Scheibenanordnung nach einem der Ansprüche 1 bis 5, wobei die Grundschicht (9), die erste dielektrische Schicht (10) und/oder die zweite dielektrische Schicht (9) einen Kunststoff, bevorzugt Polyimid (PI), Polyamid (PA), Polyethylen (PE), Polypropen (PP), Polybutylenterephtalat (PBT), Polycarbonat (PC), Polyethylenenterephtalat (PET), Polyethylennaphtalat (PEN), Polybutadien, Polyvinylchlorid (PVC) oder Polytetrafluorethen (PTFE) sowie Gemische und/oder Copolymere davon ,
eine Lackschicht, bevorzugt Alkydharz, Acrylharz, Epoxidharz oder Polyurethan,
einen Klebstoff, bevorzugt Acrylatklebstoff,
Methylmethacrylatklebstoff, Polyuerthane, Polyolefine, Cyanacrylatklebstoff, Polyepoxide, Silikonkleber und/oder Silanvernetzender-Polymerklebstoff, RTV-Silikonkautschuk, HTV-Silikonkautschuk, peroxidischvernetzter-Silikonkautschuk und/oder additionsvernetzter-Silikonkautschuk sowie Gemische und/oder Copolymere davon,
oder ein Gas, bevorzugt Luft,
enthält.

7. Scheibenanordnung nach einem der Ansprüche 1 bis 6, wobei die Leiterbahn (3) und/oder die Abschirmung (7) eine Metallfolie, eine metallisierte Polymerfolie, einen Metalldraht oder ein Metalldrahtgeflecht enthält.

8. Scheibenanordnung nach einem der Ansprüche 1 bis 7, wobei die Leiterbahn (3) und/oder die Abschirmung (7) Kupfer, Aluminium, Zinn, Gold, Silber oder Gemische davon enthält.

9. Scheibenanordnung nach einem der Ansprüche 1 bis 8, wobei die Abschirmung (7) eine Metallfolie enthält und die Metallfolie eine größere Breite (bA) als die Breite (bL) der Leiterbahn (3) aufweist.

10. Scheibenanordnung nach einem der Ansprüche 1 bis 9, wobei die Antennenstruktur (5) einen Linienstrahler, einen Flächenstrahler oder eine Hybridstruktur aus Linienstrahler und Flächenstrahler umfasst.

11. Verfahren zur Herstellung eine Scheibenanordnung nach einem der Ansprüche 1 bis 10, wobei:
a) eine Leiterbahn (3) eines Flachleiters (2) mit einer Antennenstruktur (5) auf einer ersten Scheibe (4.1) verbunden wird,
b) der Flachleiter (2) über einen äußeren Rand (6) der ersten Scheibe (4.1) herausgeführt wird,
c) die erste Scheibe (4.1) in einen metallischen Rahmen (8) eingebaut wird,
wobei eine Abschirmung (7) des Flachleiters (2) über mindestens eine zweite dielektrische Schicht (11) zumindest abschnittsweise benachbart zu dem metallischen Rahmen angeordnet wird und die Abschirmung (7) kapazitiv über den metallischen Rahmen (8) mit einer Bezugsmasse gekoppelt wird.

12. Verfahren zur Herstellung einer Scheibenanordnung nach Anspruch 11, wobei in Schritt b) der Flachleiter (2) über einen äußeren Rand (6) einer ersten Scheibe (4.1) herausgeführt wird und die erste Scheibe (4.1) über eine thermoplastische Klebeschicht (4.3) mit einer zweiten Scheibe (4.2) flächig verbunden wird.

13. Verwendung einer Scheibenanordnung nach einem der Ansprüche 1 bis 10 für eine Antennenstruktur (5), die an einer Einzelscheibe oder in oder an einer Verbundglasscheibe angeordnet ist, in einer Fahrzeugkarosserie (19) oder einer Fahrzeugtür eines Fortbewegungsmittels zu Lande, zu Wasser oder in der Luft, in einem metallischen Rahmen eines Gebäudes, bevorzugt einer Außenfassade oder eines Gebäudefensters oder in einem funktionalen und/oder dekorativen Einzelstück und als Einbauteil in Möbeln und Geräten.

## Claims

1. Pane arrangement, comprising:
- a pane (4),
- a metallic frame, wherein the pane (4) is arranged in the metallic frame (8) and wherein the metallic frame (8) is connected to a reference ground,
- an antenna structure (5), which is arranged in or on the pane (4),
- a flat conductor connecting element which is connected to the antenna structure (5) and has a flat conductor (2) with
- a base layer (9),
- a conductor track (3), which is arranged on the base layer (9),
- a first dielectric layer (10), which is arranged on the conductor track (3),
- a shield (7), which is arranged, at least in sections, on the first dielectric layer (10), and
- a second dielectric layer (11), which is arranged on the shield (7),
wherein
the conductor track (3) is electrically conductive connected to the antenna structure (5) and the flat conductor (2) runs outward over the edge (6) of the pane (4), and
the flat conductor (2) is arranged, at least in sections, adjacent the metal frame (8) and the shield (7) is capacitively coupled to the reference ground via the metal frame (8).

2. Pane arrangement according to claim 1, wherein the shield (7) is arranged between the conductor track (3) and the metal frame (8).

3. Pane arrangement according to claim 1 or 2, wherein the shield (7) extends over at least 50%, preferably over at least 75%, and particularly preferably over at least 90% of the surface of the flat conductor (2) outside the pane (4).

4. Pane arrangement according to one of claims 1 through 3, wherein the metal frame (8) comprises a vehicle body (19) or a movable metal frame, in particular a metal window frame.

5. Pane arrangement according to one of claims 1 through 4, wherein the shield (7) is arranged with an area (F) of 30 mm² to 200 mm² at a distance (d) of 0.02 mm to 2 mm from the metal frame (8) and the second dielectric layer (11) has a relative permittivity value of 1 to 6.

6. Pane arrangement according to one of claims 1 through 5 wherein the base layer (9), the first dielectric layer (10), and/or the second dielectric layer (9) includes a plastic, preferably polyimide (PI), polyamide (PA), polyethylene (PE), polypropene (PP), polybutylene terephthalate (PBT), polycarbonate (PC), polyethylene terephthalate (PET), polyethylene naphthalate (PEN), polybutadiene, polyvinyl chloride (PVC), or polytetrafluoroethylene (PTFE) as well as mixtures and/or copolymers thereof,
a varnish layer, preferably alkyd resin, acrylic resin, epoxy resin, or polyurethane,
an adhesive, preferably acrylate adhesive, methyl methacrylate adhesive, polyurethanes, polyolefins, cyanoacrylate adhesive, poly epoxies, silicone adhesive, and/or silane crosslinking polymer adhesives, RTV silicone rubber, HTV silicone rubber, peroxide vulcanizing silicone rubber, and/or addition vulcanizing silicone rubber, as well as mixtures and/or copolymers thereof,
or a gas, preferably air.

7. Pane arrangement according to one of claims 1 through 6, wherein the conductor track (3) and/or the shield (7) includes a metal foil, a metallized polymer film, a metal wire, or a metal wire mesh.

8. Pane arrangement according to one of claims 1 through 7, wherein the conductor track (3) and/or the shield (7) includes copper, aluminum, tin, gold, silver, or mixtures thereof.

9. Pane arrangement according to one of claims 1 through 8, wherein the shield (7) includes a metal foil and the metal foil has a width (bA) greater than the width (bL) of the conductor track (3).

10. Pane arrangement according to one of claims 1 through 9, wherein the antenna structure (5) comprises at least one linear emitter, one planar emitter, or a hybrid structure made of linear emitters and planar emitters.

11. Method for producing a pane arrangement according to one of claims 1 through 10, wherein:
a) a conductor track (3) of a flat conductor (2) is connected to an antenna structure (5) on a first pane (4.1),
b) the flat conductor (2) is led out over an outer edge (6) of the first pane (4.1),
c) the first pane (4.1) is installed in a metal frame (8),
wherein a shield (7) of the flat conductor (2) is arranged over at least one second dielectric layer (11) adjacent, at least in sections, to the metal frame and the shield (7) is capacitively coupled to a reference ground via the metal frame (8).

12. Method for producing a pane arrangement according to claim 11, wherein in step b) the flat conductor (2) is led out over an outer edge (6) of a first pane (4.1), and the first pane (4.1) is connected surface-to-surface to a second pane (4.2) via a thermoplastic adhesive layer (4.3).

13. Use of a pane arrangement according to one of claims 1 through 10 for an antenna structure (5), which is arranged on a single pane or in or on a composite glass pane, in a vehicle body (19) or a vehicle door of a means of transportation on land, on water, or in the air, in a metal frame of a building, preferably an exterior façade or a building window, or in a functional and/or decorative individual piece and as a built-in part in furniture and devices.

## Revendications

1. Arrangement de vitres, comprenant :
- une vitre (4)
- un cadre métallique, où la vitre (4) est disposée dans le cadre métallique (8) et où le cadre métallique (8) est relié à une masse de référence,
- une structure d'antenne (5) qui est disposée sur ou dans la vitre (4),
- une connexion de conducteur plat associé à la structure d'antenne (5) avec un conducteur plat (2) avec
- une couche de base (9),
- une piste conductrice (3), qui est disposée sur la couche de base (9),
- une première couche diélectrique (10), qui est disposée sur la piste conductrice (3),
- un blindage (7), qui est disposé, au moins par tronçons, sur la première couche diélectrique (10) et
- une deuxième couche diélectrique (11), qui est disposée sur le blindage (7),
où
la piste conductrice (3) est relié électriquement à la structure d'antenne (5) et le conducteur plat (2) s'étend sur le bord (6) de la vitre (4) vers l'extérieur, et
le conducteur plat (2) est disposé au moins par tronçons adjacents au cadre métallique (8) et le blindage est couplé de manière capacitive avec la masse de référence (7) par le cadre métallique (8).

2. Arrangement de vitres selon la revendication 1, où le blindage (7) est disposé entre la poste conductrice (3) et le cadre métallique (8).

3. Arrangement de vitres selon la revendication 1 ou 2, où le blindage (7) s'étend à l'extérieur de la vitre (4) sur au moins 50 %, de préférence au moins 75 % et de manière particulièrement préférée au moins 90 % de la superficie du conducteur plat (2).

4. Arrangement de vitres selon l'une des revendications 1 à 3, où le cadre métallique (8) comprend une carrosserie (19) de véhicule ou un cadre métallique mobile, en particulier un cadre de fenêtre métallique.

5. Arrangement de vitres selon l'une des revendications 1 à 4, où le blindage (7) est disposé avec une surface (F) de 30 mm² à 200 mm² à une distance (d) de 0,02 mm à 2 mm par rapport au cadre métallique (8) et la deuxième couche diélectrique (11) a un indice de permittivité relative de 1 à 6.

6. Arrangement de vitres selon une des revendications 1 à 5, où la couche de base (9), la première couche diélectrique (10) et/ou la deuxième couche diélectrique (9) contient un plastique de préférence du polyimide (PL), du polyamide (PA), du polyéthylène (PE), du polypropylène (PP), du polybutylène téréphtalate (PBT), du polycarbonate (PC), du polyéthylène téréphtalate (PET), du polyéthylène naphtalate (PEN), du polybutadiène, du polychlorure de vinyle (PVC) ou du polytétrafluoroéthylène (PTFE) ainsi que les mélanges ou copolymères de ceux-ci,
une couche de peinture, de préférence de résine alkyde, résine acrylique, résine époxyde ou polyuréthane,
un adhésif, de préférence une colle acrylate, un colle méthylméthacrylate, des polyuréthanes, des polyoléfines, des colles cyanoacrylates, des polyépoxydes, des colle silicones ou des colles de polymère réticulées de silanes, du caoutchouc de silicone RTV, du caoutchouc de silicone HTV, du caoutchouc de silicone réticulé de péroxydes et/ou du caoutchouc de silicone réticulé d'additions ainsi que des mélanges et/ou copolymères de ceux-ci ou un gaz, de préférence de l'air.

7. Arrangement de vitres selon l'une des revendications 1 à 6, où la piste conductrice (3) et ou le blindage (7) contient une feuille métallique, un film de polymère métallisé, un fil métallique ou un treillis métallique.

8. Arrangement de vitres selon l'une des revendications 1 à 7, où la piste conductrice (3) et ou le blindage (7) contient du cuivre, de l'aluminium, de l'étain, de l'or, de l'argent ou des mélanges contenant ceux-ci.

9. Arrangement de vitres selon l'une des revendications 1 à 8, où le blindage (7) contient une feuille métallique et la feuille métallique présente une largeur (bA) supérieure à la largeur (bL) de la piste conductrice (3).

10. Arrangement de vitres selon l'une des revendications 1 à 9, où la structure d'antenne (5) comprend un émetteur à rayonnement, un chauffage de surface ou une structure hybride d'émetteurs à rayonnement et de chauffages de surface.

11. Procédé de fabrication d'un arrangement de vitres selon l'une des revendications 1 à 10, où:
a) une piste conductrice (3) d'un conducteur plat (2) est reliée à une structure d'antenne (5) sur une première vitre (4.1),
b) le conducteur plat (2) est guidé par un bord extérieur (6) de la première vitre (4.1),
c) la première vitre (4.1 est installé dans un cadre métallique (8), où un blindage (7) du conducteur plat (2) est disposé par au moins une deuxième couche diélectrique (11) au moins par tronçons adjacent au cadre métallique et le blindage est couplé de manière capacitive avec la masse de référence (7) par le cadre métallique (8).

12. Procédé de fabrication d'un arrangement de vitres selon la réclamation 11, où à l'étape b) le conducteur plat (2) est guidé par un bord extérieur (6) d'une première vitre (4.1) et la première vitre (4.1) est reliée par toute sa surface à une deuxième vitre (4.2) par une couche de colle thermoplastique (4.3).

13. Utilisation d'un arrangement de vitres selon l'une des revendications 1 à 10 pour une structure d'antenne (5), qui est disposée dans une vitre individuelle ou dans ou sur une vitre feuilletée dans une carrosserie de véhicule (19) ou une portière de véhicule, d'un moyen de locomotion sur la terre, dans l'eau ou dans l'air, dans un cadre métallique d'un immeuble, de préférence une façade extérieure ou une fenêtre d'un immeuble ou dans une pièce fonctionnelle et/ou décoratif et/ou comme accessoire dans les meubles et les équipements.
